# EUROPEAN PATENT APPLICATION

(11) **EP 2 320 253 A1**
(43) Date of publication of application: **11.05.2011**
(21) Application number: 09802639.6
(22) Date of filing: 30.06.2009
(51) Int. Cl.: G02B 5/08, F24J 2/10, G02B 5/26, G02B 5/28

(54) **BROADBAND REFLECTING MIRROR**

(30) Priority: 28.07.2008 JP 2008193505; 07.04.2009 JP 2009092807
(71) Applicant: Nippon Electric Glass Co., Ltd., Otsu-shi Shiga 520-8639 (JP)
(72) Inventor: KANAI, Toshimasa, Otsu-shi Shiga 520-8639 (JP); SAKURAI, Takeshi, Otsu-shi Shiga 520-8639 (JP)
(74) Representative: Tetzner, Michael
(86) International application number: PCT/JP2009/003014
(87) International publication number: WO 2010/013389

(57) **Abstract**

To provide a broadband reflecting mirror having high reflectance within a wavelength band of 400 nm to 2500 nm and having excellent thermal resistance and damage resistance. A broadband reflecting mirror 1 for reflecting light within a wavelength band of 400 nm to 2500 nm includes: a first reflective layered coating 3 for reflecting light in a short wavelength side of the wavelength band of 400 nm to 2500 nm, the first reflective layered coating including first high-refractive index material and first low-refractive index material layers alternately stacked one on another; and a second reflective layered coating 4 for reflecting light in a long wavelength side of the wavelength band of 400 nm to 2500 nm, the second reflective layered coating including second high-refractive index material and second low-refractive index material layers alternately stacked one on another, wherein the first reflective layered coating 3 is disposed on the light-incident side of the broadband reflecting mirror and the second reflective layered coating 4 is disposed at a position where light having passed through the first reflective layered coating 3 can be reflected, and wherein the first high-refractive index material layer is formed of at least one material selected from the group consisting of niobium oxide, titanium oxide, zirconium oxide, tantalum oxide, hafnium oxide, silicon nitride, yttrium oxide and indium tin oxide, the first low-refractive index material layer is formed of at least one material selected from the group consisting of silicon oxide and magnesium fluoride, the second high-refractive index material layer is formed of at least one material selected from the group consisting of silicon and germanium, and the second low-refractive index material layer is formed of at least one material selected from the group consisting of silicon oxide and magnesium fluoride.

## Description

### TECHNICAL FIELD

This invention relates to broadband reflecting mirrors for reflecting light within a wavelength band of 400 nm to 2500 nm.

### BACKGROUND ART

Attention has recently been focused on apparatus and systems utilizing heat energy obtained by collecting sunlight, and development and practical utilization of solar collectors and solar concentrating systems are underway.

For example, studies have been conducted on solar power generation systems in which sunlight is collected, the heat energy therefrom is used to generate high-temperature and high-pressure steam, and the steam is used to drive a turbine or the like.

There is known a system, as a solar concentrating system, in which a plurality of heliostats are placed on the ground and light beams reflected from the heliostats are reflected by a light-collecting reflecting mirror to collect the sunlight to a collector (see for example Non-Patent Literature 1).

In order to use heat energy from sunlight, it is necessary to use visible range and infrared range of light included in sunlight and having high heat energy, and a broadband reflecting mirror is therefore required for reflecting and collecting visible range and infrared range of light.

Generally, reflecting mirrors are produced by coating a thin metal film, such as aluminum or silver, on a transparent substrate, such as glass. However, reflecting mirrors coated with such a thin metal film suffer from the problem of being poor in thermal resistance and weather resistance, because the thin metal films on their surfaces are likely to be oxidized by the environmental atmosphere.

To solve the above problem, Patent Literature 1 proposes a reflecting mirror for reflecting sunlight, wherein a metallic reflective coating is provided over a transparent substrate and an inorganic transparent protective film is provided on the metallic reflective coating.

Likewise, Patent Literature 2 proposes a reflective heat collecting plate in which a transparent protective film of inorganic material is provided on a reflective metal-deposited coating.

The inventor conducted studies on a reflecting mirror for reflecting light within a wavelength band of 400 nm to 2500 nm as a reflecting mirror for collecting sunlight, and consequently has found that the reflecting mirror provided with a metallic reflective coating for light reflection suffers from the problem of having low reflectance, particularly in a visible light range.

Meanwhile, there is known a dielectric mirror, as a reflecting mirror, in which high-refractive index material layers, such as niobium oxide, and low-refractive index material layers, such as silicon oxide, are alternately stacked to reflect sunlight using light interference. If a dielectric mirror is used to reflect light within a wavelength band of 400 nm to 2500 nm, there arises a problem in that the number of layers stacked must be considerably large.

In addition, there also arises a problem in that as the number of layers stacked increases, the reflecting mirror becomes likely to be warped by the stress in stacking the layers.

### CITATION LIST

### Patent Literature

Patent Literature 1: Published Japanese Patent Application No. S57-4003
Patent Literature 2: Examined Japanese Patent Application Publication No. S62-57904

### Non-Patent Literature

Non-Patent Literature 1 : E. Epstein, A. Segaland and A. Yogev, "A molten salt system with a ground base-integrated solar receiver storage tank." J. Phys. IV France 9, 95-104 (1999)

### SUMMARY OF INVENTION

### Technical Problem

An object of the present invention is to provide a broadband reflecting mirror having high reflectance within a wavelength band of 400 nm to 2500 nm and having excellent thermal resistance and damage resistance.

### Solution to Problem

The present invention is a broadband reflecting mirror for reflecting light within a wavelength band of 400 nm to 2500 nm, the broadband reflecting mirror including: a first reflective layered coating for reflecting light in a short wavelength side of the wavelength band of 400 nm to 2500 nm, the first reflective layered coating including first high-refractive index material and first low-refractive index material layers alternately stacked one on another; and a second reflective layered coating for reflecting light in a long wavelength side of the wavelength band of 400 nm to 2500 nm, the second reflective layered coating including second high-refractive index material and second low-refractive index material layers alternately stacked one on another, wherein the first reflective layered coating is disposed on the light-incident side of the broadband reflecting mirror and the second reflective layered coating is disposed at a position where light having passed through the first reflective layered coating can be reflected, and wherein the first high-refractive index material layer is formed of at least one material selected from the group consisting of niobium oxide, titanium oxide, zirconium oxide, tantalum oxide, hafnium oxide, silicon nitride, yttrium oxide and indium tin oxide, the first low-refractive index material layer is formed of at least one material selected from the group consisting of silicon oxide and magnesium fluoride, the second high-refractive index material layer is formed of at least one material selected from the group consisting of silicon and germanium, and the second low-refractive index material layer is formed of at least one material selected from the group consisting of silicon oxide and magnesium fluoride.

In the present invention, there are provided a first reflective layered coating for reflecting light in a short wavelength side of a wavelength band of 400 nm to 2500 nm and a second reflective layered coating for reflecting light in a long wavelength side of the wavelength band of 400 nm to 2500 nm, wherein the first reflective layered coating is formed by alternately stacking first high-refractive index material and first low-refractive index material layers, and the second reflective layered coating is formed by alternately stacking second high-refractive index material and second low-refractive index material layers.

In addition, the first high-refractive index material layer is formed of at least one material selected from the group consisting of niobium oxide, titanium oxide, zirconium oxide, tantalum oxide, hafnium oxide, silicon nitride, yttrium oxide and indium tin oxide, the first low-refractive index material layer is formed of at least one material selected from the group consisting of silicon oxide and magnesium fluoride, the second high-refractive index material layer is formed of at least one material selected from the group consisting of silicon and germanium, and the second low-refractive index material layer is formed of at least one material selected from the group consisting of silicon oxide and magnesium fluoride.

In the present invention, at least two different types of reflective layered coatings are provided which include the first reflective layered coating for reflecting light in the short wavelength side of the above wavelength band and the second reflective layered coating for reflecting light in the long wavelength side thereof, whereby the total number of layers stacked in the entire reflecting mirror can be reduced. Therefore, the manufacturing process can be simplified, resulting in efficient production.

In addition, since the number of layers stacked can be reduced, the warpage due to stress produced in depositing thin layers can be reduced.

Although silicon or germanium, both of which are metals, is used as each of high-refractive index material layers, the second low-refractive index material layers with which the above thin high-refractive index material layers alternate are made of silicon oxide or magnesium fluoride. Therefore, if a layer of silicon oxide or magnesium fluoride is disposed as the outermost layer, the reflecting mirror can be given high thermal resistance and high damage resistance.

In making the second high-refractive index material layer from silicon in the present invention, because silicon has high transmittance within a range of wavelengths longer than 1200 nm, it is preferable that the wavelength band of the short wavelength side to be reflected by the first reflective layered coating should be set to be from 400 nm to 1200 nm and the wavelength band of the long wavelength side to be reflected by the second reflective layered coating should be set to be from 1200 nm to 2500 nm.

In making the second high-refractive index material layer from germanium, because germanium has high transmittance within a range of wavelengths longer than 2000 nm, it is preferable that the wavelength band of the short wavelength side to be reflected by the first reflective layered coating should be set to be from 400 nm to 2000 nm and the wavelength band of the long wavelength side to be reflected by the second reflective layered coating should be set to be from 2000 nm to 2500 nm.

In the present invention, the first reflective layered coating is disposed on the light-incident side of the broadband reflecting mirror, and the second reflective layered coating is disposed at a position where light having passed through the first reflective layered coating can be reflected. Since the first reflective layered coating and the second reflective layered coating are arranged in this manner, the broadband reflecting mirror can achieve high reflectance. If the second reflective layered coating were disposed on the light-incident side of the reflecting mirror, light within a wavelength band to be reflected by the first reflective layered coating would be absorbed by the second reflective layered coating, whereby the reflecting mirror could not achieve high reflectance as a broadband reflecting mirror.

In the present invention, the first reflective layered coating and the second reflective layered coating are preferably provided on a transparent substrate. Since these coatings are provided on a transparent substrate, the substrate after sequential stacking of thin layers thereon can be used as a broadband reflecting mirror as it is. Examples of the transparent substrate include a glass substrate, a sapphire substrate and a resin substrate.

In a first embodiment according to the present invention, the first reflective layered coating is disposed on one surface of the transparent substrate, while the second reflective layered coating is disposed on the other surface of the transparent substrate. According to the first embodiment, since a reflective layered coating is formed on each side of the transparent substrate, the stress to be produced in stacking thin layers can be produced on both sides of the transparent substrate, whereby the stress can be balanced between both sides of the transparent substrate. Therefore, the warpage of the reflecting mirror can be reduced. Thus, according to the first embodiment, a substantially non-warped, flat broadband reflecting mirror can be produced.

In a second embodiment according to the present invention, the second reflective layered coating is disposed on top of the transparent substrate, and the first reflective layered coating is disposed on top of the second reflective layered coating. Since the first reflective layered coating and the second reflective layered coating are arranged in this manner, light having passed through the first reflective layered coating disposed on the light-incident side of the reflecting mirror is allowed to directly enter the second reflective layered coating. Since the broadband reflecting mirror allows light to enter the second reflective layered coating without passing through the transparent substrate, it can achieve high reflectance.

In a third embodiment according to the present invention, the first reflective layered coating is disposed immediately on the transparent substrate, and the second reflective layered coating is disposed on the first reflective layered coating. According to this arrangement, the transparent substrate can be disposed facing the outside, whereby the broadband reflecting mirror can increase the durability, such as damage resistance and chemical resistance.

Since the broadband reflecting mirror of the present invention can reflect light within a wavelength band of 400 nm to 2500 nm, it can be suitably used as a reflecting mirror for utilizing heat energy from sunlight. The broadband reflecting mirror can be used, for example, as a reflecting mirror for each heliostat in a solar concentrating system or as a light-collecting reflecting mirror for collecting light beams reflected by reflecting mirrors for heliostats.

The first reflective layered coating in the present invention is formed by alternately stacking first high-refractive index material and first low-refractive index material layers. The materials that can be used for the first high-refractive index material layers and the materials that can be used for the first low-refractive index material layers are the above-mentioned materials. For the first high-refractive index material layers, the plurality of stacked layers may be formed using the same material or using two or more different materials. For example, all of the stacked layers serving as the first high-refractive index material layers may be made of niobium oxide, or some of the stacked layers may be made of another high-refractive index material, such as titanium oxide. Also for the first low-refractive index material layers, the plurality of stacked layers may be formed using the same material or using different materials. However, from the standpoint of production efficiency and the like, the use of the same material is preferred.

The number of layers to be stacked in the first reflective layered coating is not particularly limited, but is preferably within the range of 30 to 200 layers in a combined total of the first high-refractive index material layers and the first low-refractive index material layers, and more preferably within the range of 70 to 90 layers. Furthermore, the thickness of the first reflective layered coating, i.e., the total thickness of the stacked first high-refractive index material layers and first low-refractive index material layers, is not particularly limited but is preferably within the range of 3 to 20 µm and more preferably within the range of 7 to 10 µm.

Also in the second reflective layered coating, each for the second high-refractive index material layers and for the second low-refractive index material layers, the same material may be used or two or more different materials may be used. However, as described previously, from the standpoint of production efficiency and the like, the use of the same material each for the second high-refractive index material layers and for the second low-refractive index material layers is preferred.

The number of layers to be stacked in the second reflective layered coating is not particularly limited, but is preferably within the range of 9 to 50 layers, and more preferably within the range of 15 to 25 layers.

The thickness of the second reflective layered coating, i.e., the total thickness of the stacked second high-refractive index material layers and second low-refractive index material layers, is not particularly limited but is preferably within the range of 2 to 10 µm and more preferably within the range of 2 to 6 µm.

The process for forming the first high-refractive index material layer, the first low-refractive index material layer, the second high-refractive index material layer and the second low-refractive index material layer is not particularly limited, and these layers can be formed by any common thin film formation process. These layers can be formed, for example, by a sputtering process, a deposition process, such as ion beam deposition, or a CVD process.

The configuration of the first high-refractive index material layers and first low-refractive index material layers in the first reflective layered coating and the second high-refractive index material layers and second low-refractive index material layers in the second reflective layered coating, inclusive of the thicknesses of these layers, can be designed through simulation. For example, the configuration can be designed using a simulation software commercially available from a manufacturer, such as The Essential Macleod Thin Film Center Inc., TF calc Software Spectra Inc. or Film Star FTG Software Associates.

In the present invention, a metal coating may be provided as a third reflective coating at a position where light having passed through the second reflective layered coating can be reflected. The provision of a metal coating as a third reflective coating allows the number of layers stacked in the second reflective layered coating to be reduced. For example, the number of layers can be within the range of 2 to 10 layers. Thus, the thickness of the second reflective layered coating can also be reduced. For example, the thickness can be within the range of 0.3 to 1 µm.

Examples of the metal coating include aluminum (Al), silver (Ag) and gold (Au). From the viewpoint of thermal resistance, aluminum (Al) is preferably used. The thickness of the metal coating is not particularly limited but is preferably within the range of 0.03 to 1 µm and more preferably within the range of 0.05 to 0.25 µm.

The process for forming the third reflective coating is not particularly limited, and the coating can be formed by any common thin film formation process. The coating can be formed, for example, by a deposition process or a sputtering process.

### Advantageous Effects of Invention

According to the present invention, a broadband reflecting mirror can be obtained which has high reflectance within a wavelength band of 400 nm to 2500 nm and has excellent thermal resistance and damage resistance.

### BRIEF DESCRIPTION OF DRAWINGS

[FIG. 1] FIG. 1 is a schematic diagram showing a broadband reflecting mirror according to a first embodiment of the present invention.
[FIG. 2] FIG. 2 is a schematic diagram showing a broadband reflecting mirror according to a second embodiment of the present invention.
[FIG. 3] FIG. 3 is a schematic diagram showing a broadband reflecting mirror according to a third embodiment of the present invention.
[FIG. 4] FIG. 4 is a graph showing the reflectance of a broadband reflecting mirror of Example 1 according to the present invention.
[FIG. 5] FIG. 5 is a graph showing the reflectance of the broadband reflecting mirror of Example 1 according to the present invention and the reflectances of broadband reflecting mirrors using conventional metal coatings.
[FIG. 6] FIG. 6 is a graph showing the reflectances of the broadband reflecting mirror of Example 1 according to the present invention before and after heat application.
[FIG. 7] FIG. 7 is a graph showing the reflectances of the reflecting mirror using a Ag (silver) coating before and after heat application.
[FIG. 8] FIG. 8 is a graph showing the reflectances of the reflecting mirror using an Al (aluminum) coating before and after heat application.
[FIG. 9] FIG. 9 is a graph showing the relation between heat application time and reflectance in Example 1 according to the present invention.
[FIG. 10] FIG. 10 is a schematic diagram showing an example of a solar concentrating system.
[FIG. 11] FIG. 11 is a graph showing the reflectances of broadband reflecting mirrors of Examples 6 and 7 according to the present invention.

### DESCRIPTION OF EMBODIMENTS

Hereinafter, the present invention will be described with reference to specific examples. However, the present invention is not limited by the following examples.

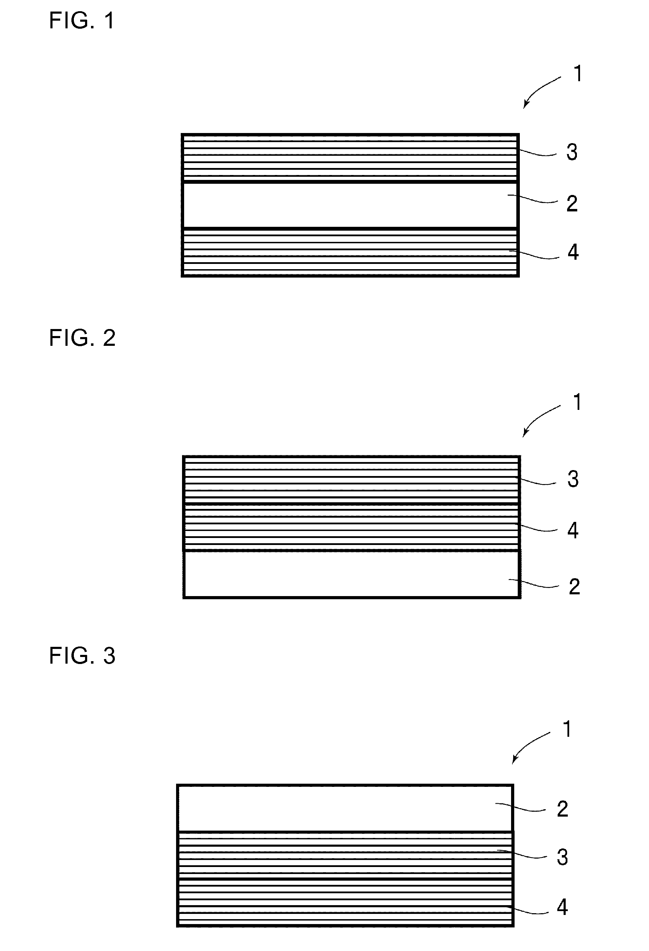

(First Embodiment) FIG. 1 is a schematic cross-sectional view showing a broadband reflecting mirror 1 according to a first embodiment. In the first embodiment according to the present invention, a first reflective layered coating 3 is disposed on one surface of a transparent substrate 2, while a second reflective layered coating 4 is disposed on the other surface of the transparent substrate 2. Light is irradiated from the top of the figure, enters the first reflective layered coating 3, passes through it, then penetrates the transparent substrate 2, and then enters the second reflective layered coating 4. The first reflective layered coating 3 reflects light in a short wavelength side of a wavelength band of 400 nm to 2500 nm. Therefore, light having passed through the first reflective layered coating contains a reduced amount of light within the above wavelength band and consists mostly of light in a long wavelength side of the wavelength band.

Light having passed through the first reflective layered coating penetrates the transparent substrate 2 and then enters the second reflective layered coating 4. The second reflective layered coating reflects light in a long wavelength side of the wavelength band of 400 nm to 2500 nm. In the present invention, silicon or germanium is used as each of second high-refractive index material layers of the second reflective layered coating. The use of silicon or germanium as each of the second high-refractive index material layers allows the number of stacked layers of the second reflective layered coating to be reduced, whereby the total number of stacked layers of the first and second reflective layered coatings can be significantly reduced.

Since in the first embodiment of the present invention a reflective layered coating is provided on each side of the transparent substrate 2, the stress produced in depositing thin layers can be balanced between both sides of the transparent substrate. Therefore, the warpage due to stress produced in depositing thin layers can be reduced, whereby a less warped broadband reflecting mirror can be produced.

(Second Embodiment) FIG. 2 is a schematic cross-sectional view showing a broadband reflecting mirror 1 according to a second embodiment of the present invention.

As shown in FIG. 2, in the broadband reflecting mirror 1 of this embodiment, a second reflective layered coating 4 is provided on one surface of a transparent substrate 2, and a first reflective layered coating 3 is provided on top of the second reflective layered coating 4. Light having passed through the first reflective layered coating 3 directly enters the second reflective layered coating 4, whereby a high-reflectance broadband reflecting mirror without light absorption in the transparent substrate 2 can be produced.

(Third Embodiment) FIG. 3 is a schematic cross-sectional view showing a broadband reflecting mirror 1 according to a third aspect of the present invention.

As shown in FIG. 3, in the broadband reflecting mirror 1 of this embodiment, a first reflective layered coating 3 is provided on one surface of a transparent substrate 2, and a second reflective layered coating 4 is provided on the first reflective layered coating 3.

According to this embodiment, the transparent substrate 2 can be disposed facing the outside, whereby a broadband reflecting mirror can be produced which has excellent durability, such as damage resistance and chemical resistance.

Examples that follow are those of a broadband reflecting mirror in which according to the first embodiment of the present invention a first reflective layered coating is disposed on one surface of a transparent substrate and a second reflective layered coating is disposed on the other surface of the transparent substrate.

(Example 1) This example is an example of a broadband reflecting mirror in which a first reflective layered coating is provided on one surface of a glass substrate and a second reflective layered coating is provided on the other surface of the glass substrate. The glass substrate is a 0.3 mm thick glass substrate having a trade name "OA-10" manufactured by Nippon Electric Glass Co., Ltd. A material used as each of first high-refractive index material layers of the first reflective layered coating is Nb₂O₅ (niobium pentoxide), and a material used as each of first low-refractive index material layers thereof is SiO₂ (silicon oxide). The thicknesses of these layers and the coating configuration are shown in TABLE 1. "Layer No." in TABLE 1 indicates the order of the layers from the glass substrate side. As shown in TABLE 1, the number of layers of the first reflective layered coating is 79.

The broadband reflecting mirror of this example is a broadband reflecting mirror designed to exhibit its highest reflectance when the angle of incidence of light thereon is approximately 20°.

**[TABLE 1]**

| Angle of Incidence: 20° | | | | | |
|---|---|---|---|---|---|
| Layer No. | Type | Thickness (nm) | Layer No. | Type | Thickness (nm) |
| 1 | Nb₂O₅ | 129.96 | 41 | Nb₂O₅ | 69.86 |
| 2 | SiO₂ | 219.77 | 42 | SiO₂ | 122.19 |
| 3 | Nb₂O₅ | 140.53 | 43 | Nb₂O₅ | 74.93 |
| 4 | SiO₂ | 217.44 | 44 | SiO₂ | 121.13 |
| 5 | Nb₂O₅ | 138.62 | 45 | Nb₂O₅ | 73.43 |
| 6 | SiO₂ | 217.3 | 46 | SiO₂ | 120.02 |
| 7 | Nb₂O₅ | 136.83 | 47 | Nb₂O₅ | 71.54 |
| 8 | SiO₂ | 197.46 | 48 | SiO₂ | 106.34 |
| 9 | Nb₂O₅ | 125.34 | 49 | Nb₂O₅ | 64.53 |
| 10 | SiO₂ | 198.65 | 50 | SiO₂ | 107.75 |
| 11 | Nb₂O₅ | 118.46 | 51 | Nb₂O₅ | 63.63 |
| 12 | SiO₂ | 199.9 | 52 | SiO₂ | 98.23 |
| 13 | Nb₂O₅ | 124.7 | 53 | Nb₂O₅ | 60.33 |
| 14 | SiO₂ | 200.17 | 54 | SiO₂ | 90.62 |
| 15 | Nb₂O₅ | 125.52 | 55 | Nb₂O₅ | 65.35 |
| 16 | SiO₂ | 178.4 | 56 | SiO₂ | 93.61 |
| 17 | Nb₂O₅ | 115.29 | 57 | Nb₂O₅ | 51.52 |
| 18 | SiO₂ | 177.09 | 58 | SiO₂ | 89.76 |
| 19 | Nb₂O₅ | 109.18 | 59 | Nb₂O₅ | 68.28 |
| 20 | SiO₂ | 171.14 | 60 | SiO₂ | 89.59 |
| 21 | Nb₂O₅ | 102.79 | 61 | Nb₂O₅ | 50.86 |
| 22 | SiO₂ | 163.03 | 62 | SiO₂ | 83.07 |
| 23 | Nb₂O₅ | 98.04 | 63 | Nb₂O₅ | 53.37 |
| 24 | SiO₂ | 151.06 | 64 | SiO₂ | 100.92 |
| 25 | Nb₂O₅ | 98.01 | 65 | Nb₂O₅ | 48.9 |
| 26 | SiO₂ | 152.7 | 66 | SiO₂ | 78.7 |
| 27 | Nb₂O₅ | 108.15 | 67 | Nb₂O₅ | 45.32 |
| 28 | SiO₂ | 153.73 | 68 | SiO₂ | 72.55 |
| 29 | Nb₂O₅ | 91.45 | 69 | Nb₂O₅ | 45.98 |
| 30 | SiO₂ | 150.35 | 70 | SiO₂ | 72.16 |
| 31 | Nb₂O₅ | 92.17 | 71 | Nb₂O₅ | 45.17 |
| 32 | SiO₂ | 134.35 | 72 | SiO₂ | 73.19 |
| 33 | Nb₂O₅ | 87.96 | 73 | Nb₂O₅ | 43.1 |
| 34 | SiO₂ | 136.55 | 74 | SiO₂ | 72.64 |
| 35 | Nb₂O₅ | 81.04 | 75 | Nb₂O₅ | 43.37 |
| 36 | SiO₂ | 127.18 | 76 | SiO₂ | 67.11 |
| 37 | Nb₂O₅ | 77.38 | 77 | Nb₂O₅ | 41.08 |
| 38 | SiO₂ | 129.75 | 78 | SiO₂ | 66.64 |
| 39 | Nb₂O₅ | 83.57 | 79 | Nb₂O₅ | 33.74 |
| 40 | SiO₂ | 114.1 | | | |

In the second reflective layered coating, a material used as each of second high-refractive index material layers is Si (silicon), and a material used as each of second low-refractive index material layers is SiO₂ (silicon oxide).

The configuration of the second reflective layered coating is shown in TABLE 2.

In TABLE 2, "layer No." indicates the order of the layers from the glass substrate side. As shown in TABLE 2, the number of layers of the second reflective layered coating in this example is 25. Furthermore, as shown in TABLE 2, in order to increase the thermal resistance, a second low-refractive index material layer made of SiO₂ is disposed as the outermost layer.

**[TABLE 2]**

| Layer No. | Type | Thickness (nm) |
|---|---|---|
| 1 | SiO₂ | 50 |
| 2 | Si | 99.53 |
| 3 | SiO₂ | 247.73 |
| 4 | Si | 99.53 |
| 5 | SiO₂ | 247.73 |
| 6 | Si | 99.53 |
| 7 | SiO₂ | 247.73 |
| 8 | Si | 99.53 |
| 9 | SiO₂ | 247.73 |
| 10 | Si | 99.53 |
| 11 | SiO₂ | 317.09 |
| 12 | Si | 155.27 |
| 13 | SiO₂ | 386.46 |
| 14 | Si | 155.27 |
| 15 | SiO₂ | 386.46 |
| 16 | Si | 155.27 |
| 17 | SiO₂ | 386.46 |
| 18 | si | 155.27 |
| 19 | SiO₂ | 386.46 |
| 20 | Si | 155.27 |
| 21 | SiO₂ | 495.46 |
| 22 | Si | 199.07 |
| 23 | SiO₂ | 495.46 |
| 24 | Si | 199.07 |
| 25 | SiO₂ | 100 |

As described so far, the broadband reflecting mirror of this example has a first reflective layered coating made of 79 layers on one side of the glass substrate and a second reflective layered coating made of 25 layers on the other side of the glass substrate. Thus, the total number of layers stacked in the entire broadband reflecting mirror is 104.

If the second reflective layered coating were composed of Nb₂O₅ and SiO₂ like the first reflective layered coating, its number of layers would be 67. Thus, the total number of layers in the entire broadband reflecting mirror would be 146. In contrast, if according to the present invention silicon or germanium is used as each second high-refractive index material layer of the second reflective layered coating, the number of layers to be stacked can be significantly reduced.

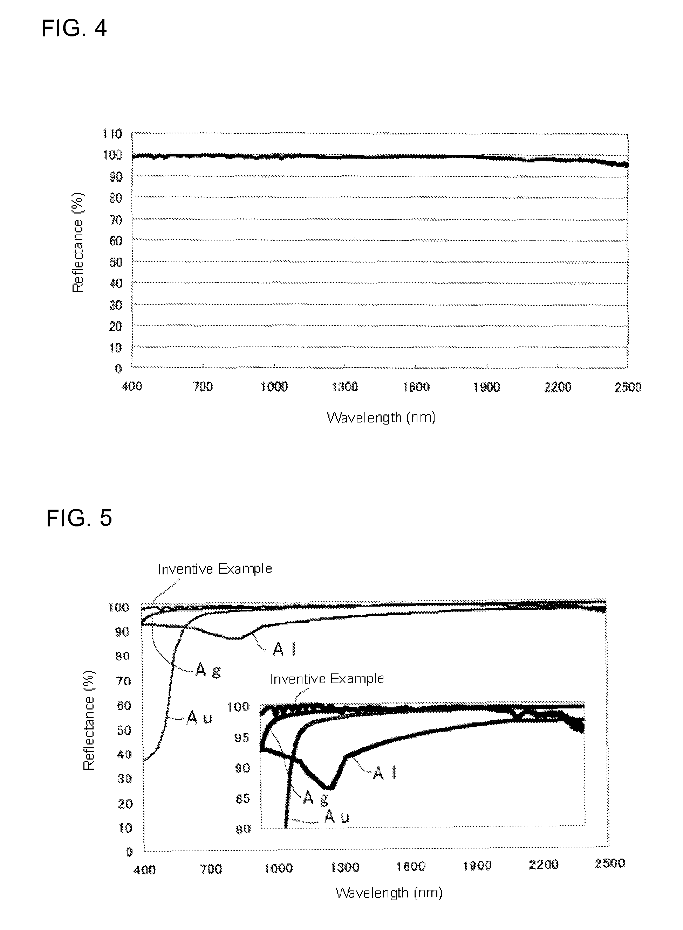

FIG. 4 is a graph showing the reflectance of this example at wavelengths of 400 nm to 2500 nm. As is evident from FIG. 4, the broadband reflecting mirror of this example has achieved high reflectance over the entire wavelength band of 400 nm to 2500 nm.

FIG. 5 is a graph showing the reflectances of comparative reflecting mirrors produced by forming a Ag coating, an Al coating and a Au coating as their respective metal coatings on their glass substrates made of the same material as used in Example 1, together with the reflectance of this example.

In FIG. 5, an enlarged graph is also given in which a zone of reflectance of 80 to 100% in the above graph is shown in an enlarged manner. Note that in the enlarged graph the scale of wavelength on the abscissa axis represents that in the graph of reflectance of 0 to 100%.

As shown in FIG. 5, it can be seen that this example (Inventive Example) exhibited high reflectance of near 100% over the entire wavelength band of 400 nm to 2500 nm, but on the other hand the reflecting mirrors formed using a Ag coating, an Al coating and a Au coating, respectively, reduced their reflectance in a visible light range.

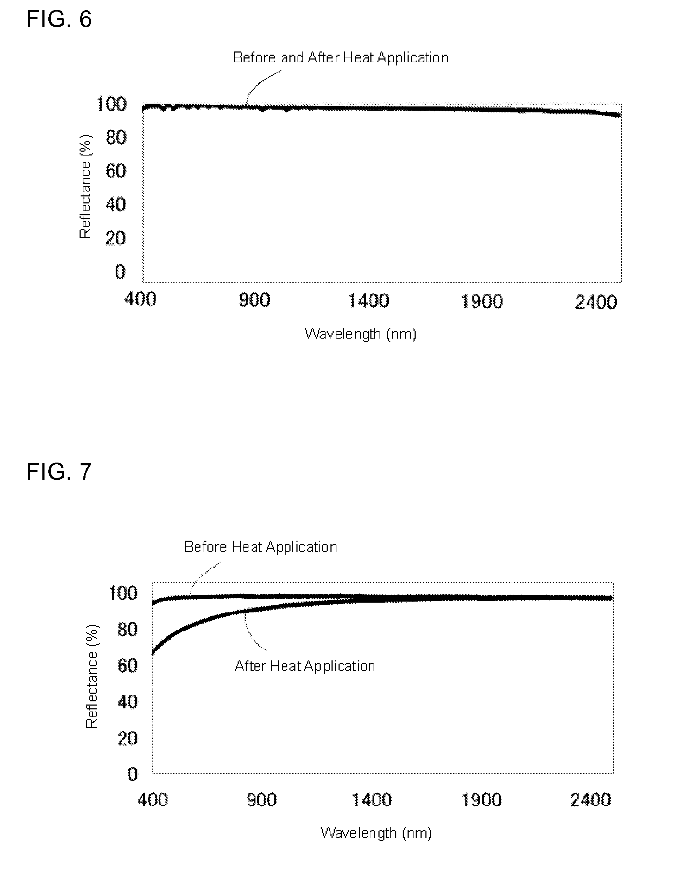

FIG. 6 is a graph showing changes in reflectance of the broadband reflecting mirror of this example between before and after being subjected to a heat application test. The condition of the heat application test was to apply heat at 300°C for 264 hours.

As shown in FIG. 6, no significant change is found in the reflectance graph between before and after the heat application, and the reflectance curves in the graph are substantially superposed. Therefore, it can be understood that the reflecting mirror of this example has excellent thermal resistance.

FIG. 7 is a graph showing the reflectances of the reflecting mirror using a Ag coating before and after heat application. The condition of the heat application was to apply heat at 300°C for an hour.

As shown in FIG. 7, it can be seen that after the heat application the reflecting mirror reduced the reflectance, particularly in a visible light range. Therefore, the reflective mirror using a Ag coating, although having high reflectance as compared to the reflecting mirrors using the other types of metal coatings as shown in FIG. 5, can be understood to be poor in thermal resistance.

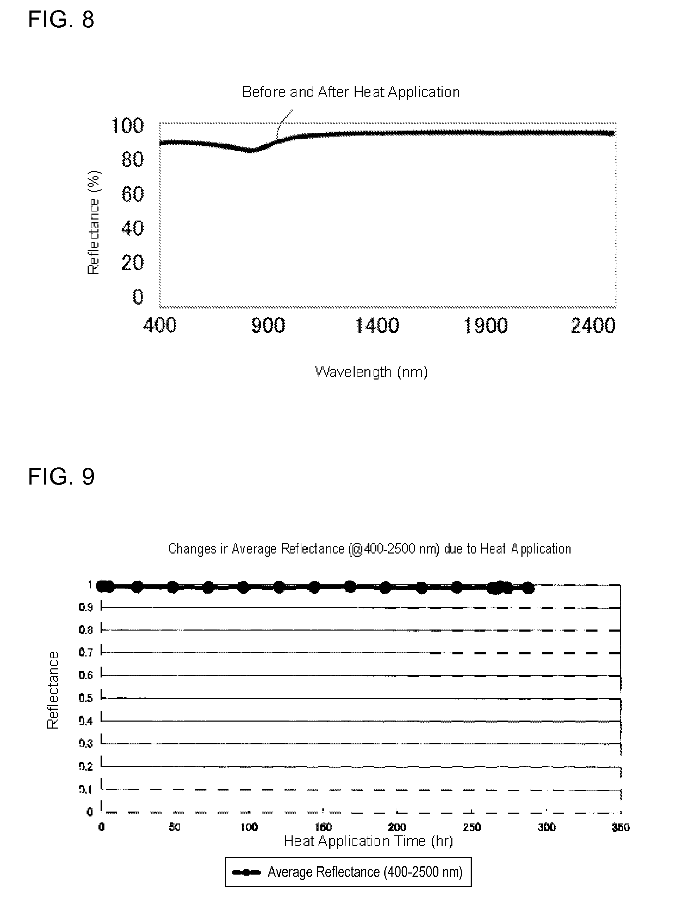

FIG. 8 is a graph showing the reflectances of the reflecting mirror using an Al coating before and after heat application.

As shown in FIG. 8, in the reflecting mirror using an Al coating, no significant change is found between before and after the heat application, and the reflectance curves in the graph are superposed. Therefore, the reflecting mirror using an Al coating has good thermal resistance. However, as shown in FIG. 5, the reflecting mirror has poor reflectance.

FIG. 9 is a graph showing the thermal resistance of the broadband reflecting mirror of this example. Measured in this case were changes in average reflectance at wavelengths of 400 nm to 2500 nm with heat application time. As shown in FIG. 9, it can be seen that the average reflectance in this example was not substantially changed even if heat application at 300°C was continued for 264 hours.

(Example 2) A broadband reflecting mirror of this example is a broadband reflecting mirror exhibiting its highest reflectance when the angle of incidence thereon is approximately 16°.

Like Example 1, Nb₂O₅ is used as each of first high-refractive index material layers, SiO₂ is used as each of first low-refractive index material layers. TABLE 3 shows the configuration of the first reflective layered coating.

**[TABLE 3]**

| Angle of Incidence: 16° | | | | | |
|---|---|---|---|---|---|
| Layer No. | Type | Thickness (nm) | Layer No. | Type | Thickness (nm) |
| 1 | Nb₂O₈ | 128.22 | 41 | Nb₂O₅ | 65.51 |
| 2 | SiO₂ | 221.29 | 42 | SiO₂ | 133.06 |
| 3 | Nb₂O₅ | 142.67 | 43 | Nb₂O₅ | 71.01 |
| 4 | SiO₂ | 217.6 | 44 | SiO₂ | 130.91 |
| 5 | Nb₂O₅ | 133.58 | 45 | Nb₂O₅ | 72.24 |
| 6 | SiO₂ | 213.26 | 46 | SiO₂ | 119.01 |
| 7 | Nb₂O₅ | 129.62 | 47 | Nb₂O₅ | 72.81 |
| 8 | SiO₂ | 194.52 | 48 | SiO₂ | 105.87 |
| 9 | Nb₂O₅ | 125.57 | 49 | Nb₂O₅ | 63.55 |
| 10 | SiO₂ | 199.75 | 50 | SiO₂ | 108.46 |
| 11 | Nb₂O₅ | 121.93 | 51 | Nb₂O₅ | 62.2 |
| 12 | SiO₂ | 197.05 | 52 | SiO₂ | 95.52 |
| 13 | Nb₂O₅ | 123.56 | 53 | Nb₂O₅ | 58.44 |
| 14 | SiO₂ | 202.89 | 54 | SiO₂ | 90.83 |
| 15 | Nb₂O₅ | 127.36 | 55 | Nb₂O₅ | 66.17 |
| 16 | SiO₂ | 178.84 | 56 | SiO₂ | 103.2 |
| 17 | Nb₂O₅ | 117.93 | 57 | Nb₂O₅ | 50.92 |
| 18 | SiO₂ | 179.4 | 58 | SiO₂ | 90.62 |
| 19 | Nb₂O₅ | 110.85 | 59 | Nb₂O₅ | 66.47 |
| 20 | SiO₂ | 170.29 | 60 | SiO₂ | 89.21 |
| 21 | Nb₂O₅ | 100.58 | 61 | Nb₂O₅ | 50.51 |
| 22 | SiO₂ | 150.63 | 62 | SiO₂ | 83.66 |
| 23 | Nb₂O₅ | 100.33 | 63 | Nb₂O₅ | 52.07 |
| 24 | SiO₂ | 148.03 | 64 | SiO₂ | 98.63 |
| 25 | Nb₂O₅ | 100.94 | 65 | Nb₂O₅ | 54.33 |
| 26 | SiO₂ | 157.48 | 66 | SiO₂ | 82.56 |
| 27 | Nb₂O₅ | 107.64 | 67 | Nb₂O₅ | 44.93 |
| 28 | SiO₂ | 147.08 | 68 | SiO₂ | 68.87 |
| 29 | Nb₂O₅ | 93.86 | 69 | Nb₂O₅ | 48.9 |
| 30 | SiO₂ | 154.42 | 70 | SiO₂ | 73.87 |
| 31 | Nb₂O₅ | 91.38 | 71 | Nb₂O₅ | 41.08 |
| 32 | SiO₂ | 144.05 | 72 | SiO₂ | 74.73 |
| 33 | Nb₂O₅ | 91.68 | 73 | Nb₂O₅ | 43.11 |
| 34 35 | SiO₂ | 141.88 | 74 | SiO₂ | 74.41 |
| | Nb₂O₅ | 80.58 | 75 | Nb₂O₅ | 44.38 |
| 36 | SiO₂ | 118.17 | 76 | SiO₂ | 67.83 |
| 37 | Nb₂O₅ | 76.74 | 77 | Nb₂O₅ | 44.96 |
| 38 | SiO₂ | 126.28 | 78 | SiO₂ | 68 |
| 39 | Nb₂O₅ | 86.64 | 79 | Nb₂O₅ | 32.32 |
| 40 | SiO₂ | 117.78 | | | |

In this example, the second reflective layered coating can have the same configuration as in Example 1. Therefore, the second reflective layered coating can have the configuration shown in TABLE 2.

(Example 3) A broadband reflecting mirror of this example is a broadband reflecting mirror exhibiting its highest reflectance when the angle of incidence thereon is approximately 23°.

Like Example 1, Nb₂O₅ is used as each of first high-refractive index material layers, SiO₂ is used as each of first low-refractive index material layers. TABLE 4 shows the configuration of the first reflective layered coating.

**[TABLE 4]**

| Angle of Incidence: 23° | | | | | |
|---|---|---|---|---|---|
| Layer No. | Type | Thickness (nm) | Layer No. | Type | Thickness (nm) |
| 1 | Nb₂O₅ | 136.5 | 41 | Nb₂O₅ | 74.31 |
| 2 | SiO₂ | 208.75 | 42 | SiO₂ | 147.79 |
| 3 | Nb₂O₅ | 137.89 | 43 | Nb₂O₅ | 80.06 |
| 4 | SiO₂ | 227.15 | 44 | SiO₂ | 111.53 |
| 5 | Nb₂O₅ | 129.77 | 45 | Nb₂O₅ | 62.86 |
| 6 | SiO₂ | 203.55 | 46 | SiO₂ | 134.3 |
| 7 | Nb₂O₅ | 120.74 | 47 | Nb₂O₅ | 71.99 |
| 8 | SiO₂ | 201.05 | 48 | SiO₂ | 120.28 |
| 9 | Nb₂O₅ | 127.37 | 49 | Nb₂O₅ | 67.91 |
| 10 | SiO₂ | 200.48 | 50 | SiO₂ | 110.47 |
| 11 | Nb₂O₅ | 119.37 | 51 | Nb₂O₅ | 66.89 |
| 12 | SiO₂ | 189.84 | 52 | SiO₂ | 99.51 |
| 13 | Nb₂O₅ | 128.83 | 53 | Nb₂O₅ | 49.67 |
| 14 | SiO₂ | 209.18 | 54 | SiO₂ | 93.51 |
| 15 | Nb₂O₅ | 126.92 | 55 | Nb₂O₅ | 69.52 |
| 16 | SiO₂ | 182.94 | 56 | SiO₂ | 92.38 |
| 17 | Nb₂O₅ | 114.19 | 57 | Nb₂O₅ | 53.59 |
| 18 | SiO₂ | 187.72 | 58 | SiO₂ | 89.01 |
| 19 | Nb₂O₅ | 114.88 | 59 | Nb₂O₅ | 63.39 |
| 20 | SiO₂ | 153.38 | 60 | SiO₂ | 87.74 |
| 21 | Nb₂O₅ | 90.84 | 61 | Nb₂O₅ | 62.19 |
| 22 | SiO₂ | 148.41 | 62 | SiO₂ | 96.03 |
| 23 | Nb₂O₅ | 95.41 | 63 | Nb₂O₅ | 49.4 |
| 24 | SiO₂ | 168.32 | 64 | SiO₂ | 96.34 |
| 25 | Nb₂O₅ | 103.95 | 65 | Nb₂O₅ | 58.03 |
| 26 | SiO₂ | 157 | 66 | SiO₂ | 79.19 |
| 27 | Nb₂O₅ | 108.05 | 67 | Nb₂O₅ | 41.13 |
| 28 | SiO₂ | 144.57 | 68 | SiO₂ | 73.37 |
| 29 | Nb₂O₅ | 89.62 | 69 | Nb₂O₅ | 44.99 |
| 30 | SiO₂ | 146.8 | 70 | SiO₂ | 82.45 |
| 31 | Nb₂O₅ | 98.99 | 71 | Nb₂O₅ | 37.88 |
| 32 | SiO₂ | 150.93 | 72 | SiO₂ | 62.32 |
| 33 | Nb₂O₅ | 103.92 | 73 | Nb₂O₅ | 50.2 |
| 34 | SiO₂ | 138.96 | 74 | SiO₂ | 80.21 |
| 35 | Nb₂O₅ | 75.47 | 75 | Nb₂O₅ | 37.7 |
| 36 | SiO₂ | 122.69 | 76 | SiO₂ | 68.9 |
| 37 | Nb₂O₅ | 81.64 | 77 | Nb₂O₅ | 40.87 |
| 38 | SiO₂ | 118.34 | 78 | SiO₂ | 87.92 |
| 39 | Nb₂O₅ | 75.44 | 79 | Nb₂O₅ | 36.89 |
| 40 | SiO₂ | 114.62 | | | |

In this example, the second reflective layered coating can have the same configuration as in Example 1. Therefore, the second reflective layered coating can have the configuration shown in TABLE 2.

(Example 4) A broadband reflecting mirror of this example is a broadband reflecting mirror exhibiting its highest reflectance when the angle of incidence thereon is approximately 30°.

Like Example 1, Nb₂O₅ is used as each of first high-refractive index material layers, SiO₂ is used as each of first low-refractive index material layers. TABLE 5 shows the configuration of the first reflective layered coating.

**[TABLE 5]**

| Angle of Incidence: 30° | | | | | |
|---|---|---|---|---|---|
| Layer No. | Type | Thickness (nm) | LayerNo. | Type | Thickness (nm) |
| 1 | Nb₂O₅ | 144.05 | 41 | Nb₂O₅ | 88.05 |
| 2 | SiO₂ | 225.97 | 42 | SiO₂ | 137.48 |
| 3 | Nb₂O₅ | 122.55 | 43 | Nb₂O₅ | 82.15 |
| 4 | SiO₂ | 211.65 | 44 | SiO₂ | 104.8 |
| 5 | Nb₂O₅ | 130.46 | 45 | Nb₂O₅ | 64.73 |
| 6 | SiO₂ | 214.64 | 46 | SiO₂ | 128.62 |
| 7 | Nb₂O₅ | 120.68 | 47 | Nb₂O₅ | 74.5 |
| 8 | SiO₂ | 196.94 | 48 | SiO₂ | 129 |
| 9 | Nb₂O₅ | 122 | 49 | Nb₂O₅ | 56.16 |
| 10 | SiO₂ | 211.9 | 50 | SiO₂ | 136.23 |
| 11 | Nb₂O₅ | 127.72 | 51 | Nb₂O₅ | 59.62 |
| 12 | SiO₂ | 204.8 | 52 | SiO₂ | 89.18 |
| 13 | Nb₂O₅ | 127.64 | 53 | Nb₂O₅ | 60.09 |
| 14 | SiO₂ | 204.72 | 54 | SiO₂ | 106.52 |
| 15 | Nb₂O₅ | 128.04 | 55 | Nb₂O₅ | 52.32 |
| 16 | SiO₂ | 186.01 | 56 | SiO₂ | 101.96 |
| 17 | Nb₂O₅ | 117.36 | 57 | Nb₂O₅ | 59.45 |
| 18 | SiO₂ | 195.02 | 58 | SiO₂ | 115.89 |
| 19 | Nb₂O₅ | 109.18 | 59 | Nb₂O₅ | 52.17 |
| 20 | SiO₂ | 160.15 | 60 | SiO₂ | 84.98 |
| 21 | Nb₂O₅ | 93.52 | 61 | Nb₂O₅ | 51.18 |
| 22 | SiO₂ | 140.44 | 62 | SiO₂ | 93.84 |
| 23 | Nb₂O₅ | 99.33 | 63 | Nb₂O₅ | 69.53 |
| 24 | SiO₂ | 166.99 | 64 | SiO₂ | 86.76 |
| 25 | Nb₂O₅ | 105.68 | 65 | Nb₂O₅ | 48.69 |
| 26 | SiO₂ | 174.45 | 66 | SiO₂ | 75.22 |
| 27 | Nb₂O₅ | 95.77 | 67 | Nb₂O₅ | 42.29 |
| 28 | SiO₂ | 149.48 | 68 | SiO₂ | 79.18 |
| 29 | Nb₂O₅ | 89.62 | 69 | Nb₂O₅ | 38.91 |
| 30 | SiO₂ | 152.64 | 70 | SiO₂ | 88.32 |
| 31 | Nb₂O₅ | 102.12 | 71 | Nb₂O₅ | 37.67 |
| 32 | SiO₂ | 152.85 | 72 | SiO₂ | 75.9 |
| 33 | Nb₂O₅ | 96.69 | 73 | Nb₂O₅ | 39.11 |
| 34 | SiO₂ | 142.49 | 74 | SiO₂ | 90.52 |
| 35 | Nb₂O₅ | 80.25 | 75 | Nb₂O₅ | 30.69 |
| 36 | SiO₂ | 119.16 | 76 | SiO₂ | 92.33 |
| 37 | Nb₂O₅ | 88.1 | 77 | Nb₂O₅ | 35.09 |
| 38 | SiO₂ | 124.95 | 78 | SiO₂ | 97.16 |
| 39 | Nb₂O₅ | 60.62 | 79 | Nb₂O₅ | 29.63 |
| 40 | SiO₂ | 124.26 | | | |

In this example, the second reflective layered coating can have the same configuration as in Example 1. Therefore, the second reflective layered coating can have the configuration shown in TABLE 2.

(Example 5) A broadband reflecting mirror of this example is a broadband reflecting mirror using germanium as each of second high-refractive index material layers. Since germanium has high absorption in a short wavelength band up to 2000 nm as described previously, the first reflective layered coating is designed to reflect light within a wavelength band of 400 nm to 2000 nm. On the other hand, the second reflective layered coating is designed to reflect light within a wavelength band of 2000 nm to 2500 nm.

TABLE 6 shows the configuration of the first reflective layered coating when Nb₂O₅ is used as each of first high-refractive index material layers and SiO₂ is used as each of first low-refractive index material layers.

**[TABLE 6]**

| Layer No. | Type | Thickness (nm) | Layer No. | Type | Thickness (nm) | Layer No. | Type | Thickness (nm) |
|---|---|---|---|---|---|---|---|---|
| 1 | Nb₂O₅ | 204,04 | 41 | Nb₂O₅ | 109.18 | 81 | Nb₂O₅ | 68.28 |
| 2 | SiO₂ | 309.39 | 42 | SiO₂ | 171.14 | 82 | SiO₂ | 89.59 |
| 3 | Nb₂O₅ | 197.04 | 43 | Nb₂O₅ | 102.79 | 83 | Nb₂O₅ | 50.86 |
| 4 | SiO₂ | 31442 | 44 | SiO₂ | 163.03 | 84 | SiO₂ | 83.07 |
| 5 | Nb₂O₅ | 205.12 | 45 | Nb₂O₅ | 95.04 | 85 | Nb₂O₅ | 53.37 |
| 6 | SiO₂ | 322.33 | 46 | SiO₂ | 151.06 | 86 | SiO₂ | 100.92 |
| 7 | Nb₂O₅ | 197.5 | 47 | Nb₂O₅ | 98.01 | 87 | Nb₂O₅ | 46.9 |
| 8 | SiO₂ | 319.66 | 48 | SiO₂ | 152.7 | 88 | SiO₂ | 78.7 |
| 9 | Nb₂O₅ | 196.1 | 49 | Nb₂O₅ | 108.15 | 89 | Nb₂O₅ | 45.32 |
| 10 | SiO₂ | 306.03 | 50 | SiO₂ | 153.73 | 90 | SiO₂ | 72.58 |
| 11 | Nb₂O₅ | 190.77 | 51 | Nb₂O₅ | 91.45 | 91 | Nb₂O₅ | 45.98 |
| 12 | SiO₂ | 296.18 | 52 | SiO₂ | 150.35 | 92 | SiO₂ | 72.16 |
| 13 | Nb₂O₅ | 178.65 | 53 | Nb₂O₅ | 92.17 | 93 | Nb₂O₅ | 45.17 |
| 14 | SiO₂ | 284.54 | 54 | SiO₂ | 134.35 | 94 | SiO₂ | 73.19 |
| 15 | Nb₂O₅ | 180.52 | 55 | Nb₂O₅ | 87.96 | 95 | Nb₂O₅ | 43.1 |
| 16 | SiO₂ | 259.67 | 56 | SiO₂ | 136.55 | 96 | SiO₂ | 72.64 |
| 17 | Nb₂O₅ | 130.91 | 57 | Nb₂O₅ | 81.04 | 97 | Nb₂O₅ | 43.37 |
| 18 | SiO₂ | 223.42 | 58 | SiO₂ | 127.18 | 98 | SiO₂ | 67.11 |
| 19 | Nb₂O₅ | 141.66 | 59 | Nb₂O₅ | 77.38 | 99 | Nb₂O₅ | 41.08 |
| 20 | SiO₂ | 257.94 | 60 | SiO₂ | 129.75 | 100 | SiO₂ | 66.64 |
| 21 | Nb₂O₅ | 174.11 | 61 | Nb₂O₈ | 83.57 | 101 | Nb₂O₅ | 33.74 |
| 22 | SiO₂ | 317.55 | 62 | SiO₂ | 114.1 | | | |
| 23 | Nb₂O₅ | 129.96 | 63 | Nb₂O₅ | 69.86 | | | |
| 24 | SiO₂ | 219.77 | 64 | SiO₂ | 122.18 | | | |
| 25 | Nb₂O₅ | 140.53 | 65 | Nb₂O₅ | 74.93 | | | |
| 26 | SiO₂ | 217.44 | 66 | SiO₂ | 121.13 | | | |
| 27 | Nb₂O₅ | 138.62 | 67 | Nb₂O₅ | 73.43 | | | |
| 28 | SiO₂ | 217.3 | 68 | SiO₂ | 120.02 | | | |
| 29 | Nb₂O₅ | 136.83 | 69 | Nb₂O₅ | 71.54 | | | |
| 30 | SiO₂ | 197.46 | 70 | SiO₂ | 106.34 | | | |
| 31 | Nb₂O₅ | 125.34 | 71 | Nb₂O₅ | 106.34 | | | |
| 32 | SiO₂ | 198.65 | 72 | SiO₂ | 107.75 | | | |
| 33 | Nb₂O₅ | 118.46 | 73 | Nb₂O₅ | 63.63 | | | |
| 34 | SiO₂ | 199.9 | 74 | SiO₂ | 98.23 | | | |
| 35 | Nb₂O₅ | 124.7 | 75 | Nb₂O₅ | 60.33 | | | |
| 36 | SiO₂ | 200.17 | 76 | SiO₂ | 90.62 | | | |
| 37 | Nb₂O₅ | 125.52 | 77 | Nb₂O₅ | 65.35 | | | |
| 38 | SiO₂ | 178.4 | 78 | SiO₂ | 93.61 | | | |
| 39 | Nb₂O₅ | 115.29 | 79 | Nb₂O₅ | 51.52 | | | |
| 40 | SiO₂ | 177.09 | 80 | SiO₂ | 89.76 | | | |

As shown in TABLE 6, the number of layers of the first reflective layered coating is 101.

TABLE 7 shows the configuration of the second reflective layered coating when Ge (germanium) is used as each of second high-refractive index material layers and SiO₂ (silicon oxide) is used as each of second low-refractive index material layers.

**[TABLE 7]**

| Layer No. | Type | Thickness (nm) |
|---|---|---|
| 1 | SiO₂ | 50 |
| 2 | Ge | 74.36 |
| 3 | SiO₂ | 247.73 |
| 4 | Ge | 74.36 |
| 5 | SiO₂ | 247.73 |
| 6 | Ge | 74.36 |
| 7 | SiO₂ | 247.73 |
| 8 | Ge | 74.36 |
| 9 | SiO₂ | 317.09 |
| 10 | Ge | 116 |
| 11 | SiO₂ | 386.46 |
| 12 | Ge | 116 |
| 13 | SiO₂ | 386.46 |
| 14 | Ge | 116 |
| 15 | SiO₂ | 386.46 |
| 16 | Ge | 116 |
| 17 | SiO₂ | 495.46 |
| 18 | Ge | 148.72 |
| 19 | SiO₂ | 495.46 |
| 20 | Ge | 148.72 |
| 21 | SiO₂ | 100 |

As shown in TABLE 7, the number of layers of the second reflective layered coating is 21.

Therefore, the total number of layers in the entire broadband reflecting mirror is 122, which is smaller than 146, the number of layers when the broadband reflecting mirror is composed only of Nb₂O₅ and SiO₂, but is larger than the number of layers in Example 1.

(Example 6) A broadband reflecting mirror of this example is a broadband reflecting mirror in which a metal coating is provided as a third reflective coating on a second reflective layered coating. The mirror is a broadband reflecting mirror exhibiting its highest reflectance when the angle of reflection thereon is approximately 20°.

The configuration of a first reflective layered coating in this example is the configuration shown in TABLE 1.

The configuration of the second reflective layered coating and the third reflective coating in this example is the configuration shown in TABLE 8.

**[TABLE 8]**

| Layer No. | Type | Thickness (nm) |
|---|---|---|
| 1 | Si | 103 |
| 2 | SiO₂ | 263 |
| 3 | Al | 200 |

As shown in TABLE 8, the second reflective layered coating is formed by stacking a Si layer and a SiO₂ layer. An Al layer serving as a third reflective coating is formed on the SiO₂ layer.

The formation of the Al layer as a third reflective coating allows the number of layers of the second reflective layered coating to be reduced as shown in TABLE 8.

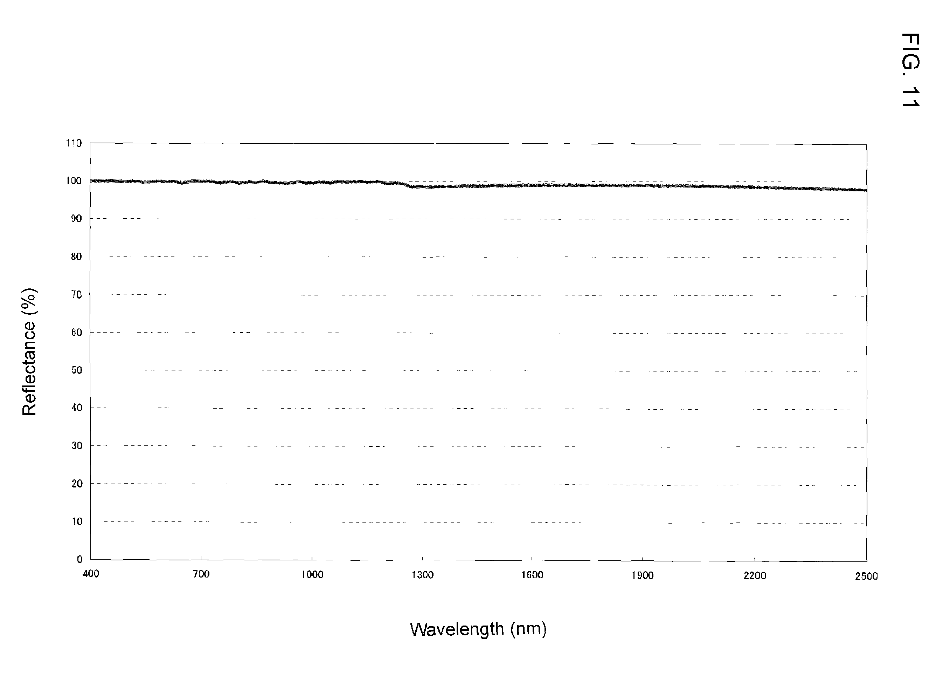

FIG. 11 is a graph showing the reflectance of this example at wavelengths of 400 nm to 2500 nm. As is evident from FIG. 11, the broadband reflecting mirror of this example also has achieved high reflectance over the entire wavelength band of 400 nm to 2500 nm. In addition, it has been confirmed that the reflectance of this example after being heated at 300°C for 264 hours is the same as in FIG. 11 and the example has excellent thermal resistance.

(Example 7) A broadband reflecting mirror of this example is, like Example 6, a broadband reflecting mirror in which a metal coating is provided as a third reflective coating on a second reflective layered coating. The mirror is a broadband reflecting mirror exhibiting its highest reflectance when the angle of incidence thereon is approximately 20°.

A first reflective layered coating has the configuration shown in TABLE 1.

The second reflective layered coating and the third reflective coating has the configuration shown in TABLE 9.

**[TABLE 9]**

| Layer No. | Type | Thickness (nm) |
|---|---|---|
| 1 | SiO₂ | 50 |
| 2 | Si | 103 |
| 3 | SiO₂ | 263 |
| 4 | Al | 200 |
| 5 | SiO₂ | 50 |

The SiO₂ layer of Layer No. 5 in TABLE 9 is a protective layer for protecting the Al coating serving as a third reflective coating. Furthermore, the SiO₂ layer of Layer No. 1 is a layer provided for improving the adhesion of the Si layer of Layer No. 2 to the glass substrate.

The second reflective layered coating is composed of Layers Nos. 1 to 3. The Si layer is a second high-refractive index material layer, and the remaining SiO₂ layer is a second low-refractive index material layer.

As shown in TABLE 9, the provision of the Al layer as a third reflective coating allows the number of layers of the second reflective layered coating to be reduced. In this example, the SiO₂ layer (Layer No. 5) serving as a protective layer is provided outside of the Al layer, whereby the thermal resistance can be further enhanced.

The reflectance of this example at wavelengths of 400 nm to 2500 nm was as shown in FIG. 11, which was the same as in Example 6. In addition, it has been confirmed that like Example 6 this example has excellent thermal resistance.

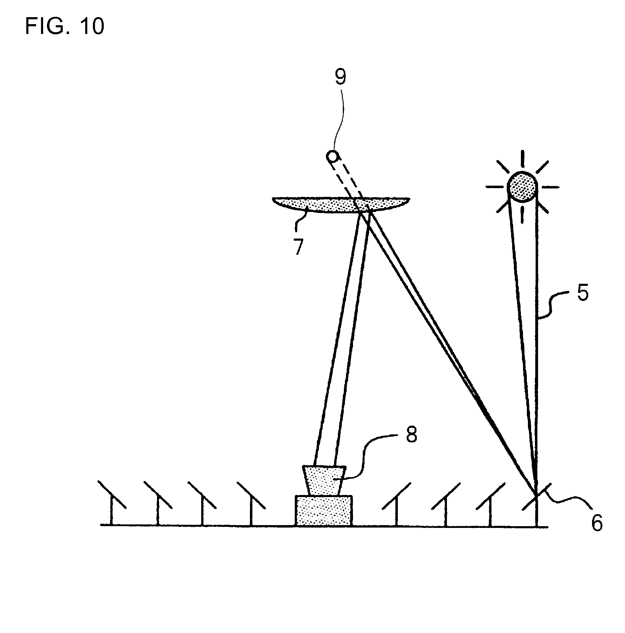

(Solar Concentrating System) FIG. 10 is a schematic diagram showing an example of a solar concentrating system. In the solar concentrating system shown in FIG. 10, a plurality of heliostats 6 are placed on the ground. Each heliostat 6 can change the angle of its reflecting mirror according to the position of the sun to direct the reflected light of the sunlight 5 to a converging point 9. In order to allow the reflected light from the heliostat 6 to be reflected, a light-collecting reflecting mirror 7 is provided at a high elevation short of the converging point 9. The light-collecting reflecting mirror 7 reflects the reflected light from the heliostat 6 to collect it to a solar collector 8 provided near the ground. The reflected light beams from all the heliostats 6 are directed to the light-collecting reflecting mirror 7, reflected by the light-collecting reflecting mirror 7 and then collected by the solar collector 8.

The broadband reflecting mirror of the present invention can be used as the reflecting mirror for each heliostat 6 or as the light-collecting reflecting mirror 7. Particularly, the light-collecting reflecting mirror 7 is heated to high temperature since the reflected light beams from all the heliostats 6 are collected thereto. Therefore, the light-collecting reflecting mirror 7 is required to have high thermal resistance. Accordingly, the broadband reflecting mirror of the present invention can be suitably used as such a light-collecting reflecting mirror.

### REFERENCE SIGNS LIST

- 1: broadband reflecting mirror
- 2: transparent substrate
- 3: first reflective layered coating
- 4: second reflective layered coating
- 5: sunlight
- 6: heliostat
- 7: light-collecting reflecting mirror solar collector
- 9: converging point

## Claims

1. A broadband reflecting mirror for reflecting light within a wavelength band of 400 nm to 2500 nm, the broadband reflecting mirror comprising: a first reflective layered coating for reflecting light in a short wavelength side of the wavelength band of 400 nm to 2500 nm, the first reflective layered coating including first high-refractive index material and first low-refractive index material layers alternately stacked one on another; and a second reflective layered coating for reflecting light in a long wavelength side of the wavelength band of 400 nm to 2500 nm, the second reflective layered coating including second high-refractive index material and second low-refractive index material layers alternately stacked one on another, wherein the first reflective layered coating is disposed on the light-incident side of the broadband reflecting mirror and the second reflective layered coating is disposed at a position where light having passed through the first reflective layered coating can be reflected, and wherein the first high-refractive index material layer is formed of at least one material selected from the group consisting of niobium oxide, titanium oxide, zirconium oxide, tantalum oxide, hafnium oxide, silicon nitride, yttrium oxide and indium tin oxide, the first low-refractive index material layer is formed of at least one material selected from the group consisting of silicon oxide and magnesium fluoride, the second high-refractive index material layer is formed of at least one material selected from the group consisting of silicon and germanium, and the second low-refractive index material layer is formed of at least one material selected from the group consisting of silicon oxide and magnesium fluoride.

2. The broadband reflecting mirror according to claim 1, wherein the second high-refractive index material layer is formed of silicon, the wavelength band of the short wavelength side is 400 nm to 1200 nm, and the wavelength band of the long wavelength side is 1200 nm to 2500 nm.

3. The broadband reflecting mirror according to claim 1, wherein the second high-refractive index material layer is formed of germanium, the wavelength band of the short wavelength side is 400 nm to 2000 nm, and the wavelength band of the long wavelength side is 2000 nm to 2500 nm.

4. The broadband reflecting mirror according to any one of claims 1 to 3, wherein the first reflective layered coating and the second reflective layered coating are provided on a transparent substrate, the first reflective layered coating is disposed on one surface of the transparent substrate, and the second reflective layered coating is disposed on the other surface of the transparent substrate.

5. The broadband reflecting mirror according to any one of claims 1 to 3, wherein the first reflective layered coating and the second reflective layered coating are provided on a transparent substrate, the second reflective layered coating is disposed on top of the transparent substrate, and the first reflective layered coating is disposed on top of the second reflective layered coating.

6. The broadband reflecting mirror according to any one of claims 1 to 3, wherein the first reflective layered coating and the second reflective layered coating are provided on a transparent substrate, the first reflective layered coating is disposed immediately on the transparent substrate, and the second reflective layered coating is disposed on the first reflective layered coating.

7. The broadband reflecting mirror according to any one of claims 1 to 6, wherein a metal coating is provided as a third reflective coating at a position where light having passed through the second reflective layered coating can be reflected.

8. The broadband reflecting mirror according to any one of claims 1 to 7, the broadband reflecting mirror being used as a reflecting mirror for a heliostat in a solar concentrating system or as a light-collecting reflecting mirror for collecting light beams reflected by reflecting mirrors for heliostats.
